# FASCICULE DE BREVET EUROPEEN

(11) **EP 2 525 525 B1**
(45) Date de publication et mention de la délivrance du brevet: **02.08.2017**
(21) Numéro de dépôt: 12168551.5
(22) Date de dépôt: 18.05.2012
(51) Int. Cl.: H04L 9/32

(54) **Procédé, programme d'ordinateur et dispositif de cooptation permettant à un abonné d'un service de partager ce service avec un autre utilisateur**
Verfahren, Computerprogramm und Kooptationsgerät, welche es einem Dienstabonnenten ermöglichen, diesen Dienst mit einem anderen Benutzer zu teilen
Method, computer programme and cooptation device enabling a service subscriber to share said service with another user

(30) Priorité: 19.05.2011 FR 1154390
(43) Date de publication de la demande: 21.11.2012
(73) Titulaire: Orange, 75015 Paris (FR)
(72) Inventeur: Binard, Fabien, 75018 Paris (FR); Eyrignoux, Christophe, 94800 Villejuif (FR); Loudette, Alain, 78711 Mantes La Ville (FR)
(74) Mandataire: Regimbeau

(56) Documents cités:
- US-B1- 6 851 053

## Description

La présente invention concerne l'accès à des services, via un réseau de communication, impliquant plusieurs utilisateurs et plus particulièrement un procédé, un programme d'ordinateur et un dispositif de cooptation permettant à un abonné d'un service, typiquement un service de visioconférence, de partager ce service accessible via un réseau de communication avec un autre utilisateur disposant d'une connexion à ce réseau de communication mais ne disposant pas d'un abonnement à ce service.

Le développement des équipements d'acquisition et de traitement de l'information, les progrès réalisés dans les algorithmes de codage de données et l'augmentation de la bande passante dans les réseaux de communication ont permis le développement de nombreux services parmi lesquels les services de visioconférence.

La visioconférence permet à deux utilisateurs ou plus d'établir un lien audio-vidéo entre des équipements distants. De tels équipements sont typiquement des ordinateurs ou, plus généralement, des systèmes comprenant des écrans ou des projecteurs, des caméras, des microphones et des haut-parleurs. Ces équipements sont reliés par un réseau de communication à l'aide d'un fournisseur de services mettant en oeuvre une application logicielle utilisée pour établir un lien audio-vidéo entre les utilisateurs.

Des services de visioconférence sont aujourd'hui ouverts à des utilisateurs abonnés à un même fournisseur de services ainsi qu'à des utilisateurs abonnés à des fournisseurs de services différents. Cependant, dans ce dernier cas, il est nécessaire de normaliser les services proposés ou de mettre en oeuvre une infrastructure technique pour interfacer les services proposés par les fournisseurs de services.

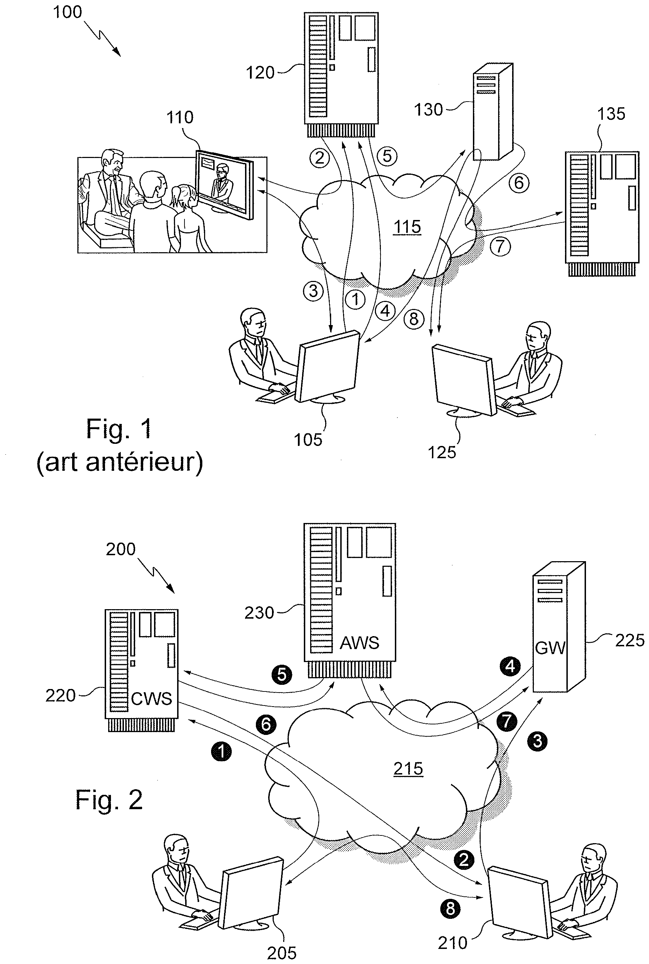

A titre d'illustration, la figure 1 représente schématiquement un environnement 100 permettant à des utilisateurs de partager un service de visioconférence. Ainsi, un utilisateur pourvu d'un équipement 105, par exemple un ordinateur de type PC (sigle de *Personal Computer* en terminologie anglo-saxonne), peut établir une visioconférence avec des utilisateurs pourvus d'un équipement 110, par exemple un système de visioconférence dédié comprenant un téléviseur et un terminal de type *set-top box,* via un réseau de communication 115 à l'aide d'outils proposés par un fournisseur de services, mis en oeuvre ici dans un serveur d'applications 120. Les utilisateurs des équipements 105 et 110 sont ici abonnés au même fournisseur de services gérant les outils mis en oeuvre dans le serveur d'applications 120.

A ces fins, une requête est envoyée par l'équipement 105 au serveur d'applications 120 via le réseau de communication (étape ①). Cette requête, comprenant ici un identifiant de l'équipement 110, est analysée par les outils mis en oeuvre dans le serveur d'applications 120 afin d'identifier l'équipement 110. Une requête est alors transmise par le serveur d'application 120 à l'équipement 110 (étape ②) afin d'établir un lien audio-vidéo (noté ③) entre les équipements 105 et 110. Alternativement, chacun des équipements 105 et 110 peut adresser une requête au serveur d'applications 120, chaque requête comprenant un même identifiant prédéterminé, permettant aux outils mis en oeuvre dans le serveur d'applications 120 d'établir un lien audio-vidéo entre les équipements desquels il a reçu une requête comprenant un même identifiant. Naturellement, des mécanismes de contrôle et d'authentification (non représentés) sont mis en oeuvre pour offrir un niveau de fiabilité et de sécurité requis.

L'environnement 100 permet également à l'utilisateur de l'équipement 105 d'établir une visioconférence avec un utilisateur pourvu d'un équipement 125. Les utilisateurs des équipements 105 et 125 ne sont ici pas abonnés au même fournisseur de services. Par conséquent, pour permettre l'établissement d'une visioconférence entre les équipements 105 et 125, une passerelle 130 est utilisée entre les serveurs d'applications 120 et 135 hébergeant les outils de visioconférence des fournisseurs de services concernés.

A ces fins, une requête est envoyée par l'équipement 105 au serveur d'applications 120 via le réseau de communication (étape ④). Cette requête, comprenant ici un identifiant de l'équipement 125, est analysée par les outils mis en oeuvre dans le serveur d'applications 120 afin d'identifier l'équipement 125. Il est ainsi déterminé que l'utilisateur de cet équipement n'est pas un abonné du fournisseur de services correspondant au serveur d'applications 120. L'identifiant reçu dans la requête permet néanmoins d'identifier la passerelle 130 permettant d'accéder au serveur d'applications 135 du fournisseur de services auprès duquel est abonné l'utilisateur de l'équipement 125. Une requête est alors transmise à la passerelle 130 (étape ⑤). En réponse à la réception de cette requête, la passerelle 130 génère à son tour une requête qui est transmises au serveur d'applications 135 (étape ⑥). Alternativement, la requête reçue par la passerelle 130 est transmise, après modification ou non, au serveur d'applications 135. Une requête est alors transmise par le serveur d'applications 135 à l'équipement 125 (étape ⑦) afin d'établir un lien audio-vidéo (noté ⑧) entre les équipements 105 et 110. Typiquement, ce lien passe par la passerelle 130 qui effectue les conversions nécessaires.

Un autre exemple d'art antérieur est représenté par le brevet US 6,851,053 B1, délivré le 1. Mars 2000 à Liles et al., exposant un procédé et système de contrôle d'admission à une conférence sécurisée. Alors que ces solutions permettent à un utilisateur abonné à un fournisseur de services de partager un service fourni par ce dernier avec un autre utilisateur n'étant pas abonné auprès de ce fournisseur de services, ces solutions présentent des inconvénients, notamment en termes de coûts et de complexité technique.

L'invention permet de remédier à des inconvénients de l'état de la technique.

L'invention a ainsi pour objet un procédé d'initiation d'au moins un service d'un serveur d'applications, ledit au moins un service mettant en oeuvre une pluralité d'équipements, chaque équipement de ladite pluralité d'équipements appartenant à un utilisateur d'une pluralité d'utilisateurs, au moins un utilisateur de ladite pluralité d'utilisateurs, appelé abonné, ayant souscrit audit au moins un service et au moins un utilisateur de ladite pluralité d'utilisateurs, appelé non abonné, n'ayant pas souscrit audit au moins un service, ce procédé comprenant les étapes suivantes,
- génération d'un certificat d'authentification dudit abonné à partir d'un identifiant dudit abonné ;
- transmission dudit certificat d'authentification généré à un équipement dudit non abonné ;
- réception d'un certificat d'authentification provenant dudit équipement dudit non abonné ;
- détermination de la validité dudit certificat d'authentification reçu, la validité dudit certificat d'authentification reçu étant déterminée selon ledit identifiant dudit abonné ;
- si ledit certificat d'authentification reçu est valide, transmission (330) dudit identifiant dudit abonné, ledit identifiant dudit abonné permettant d'initier ledit au moins un service.

L'invention permet ainsi à un abonné de pouvoir bénéficier pleinement de l'offre de services à laquelle il a souscrit, même avec des utilisateurs n'étant pas abonnés à cette offre. En outre, la mise en oeuvre de l'invention ne nécessite pas d'infrastructure complexe et coûteuse, nécessitant des éléments matériels ou logiciels spécifiques.

Selon un mode de réalisation particulier, ladite étape de transmission dudit certificat d'authentification généré comprend une étape de transmission d'un lien avec ledit certificat d'authentification généré, ledit lien permettant d'accéder au dispositif mettant en oeuvre ledit procédé pour lui transmettre ledit certificat d'authentification. L'utilisateur non abonné peut ainsi très facilement accepter le service qui lui est proposé. Un tel lien peut être créé selon un format standard, notamment un format basé sur une technologie très largement répandue et donc utilisable par un grand nombre, avant qu'il ne soit transmis.

Toujours selon un mode de réalisation particulier, ladite étape de détermination de la validité dudit certificat d'authentification reçu comprend une étape de comparaison de la date de réception dudit certificat d'authentification reçu avec un seuil prédéterminé. Ainsi, il est possible de contrôler la période durant laquelle un service dont l'accès est proposé par un utilisateur abonné à un utilisateur non abonné est accessible à ce dernier.

Toujours selon un mode de réalisation particulier, le procédé comprend en outre une étape de réception (300) d'un message d'un équipement dudit abonné, ledit message comprenant ledit identifiant dudit abonné et un identifiant dudit non abonné, ledit certificat d'authentification généré étant transmis audit équipement dudit non abonné selon ledit identifiant dudit non abonné.

Toujours selon un mode de réalisation particulier, ledit identifiant dudit non abonné est une adresse électronique, le procédé comprenant en outre une étape de création d'un second message comprenant au moins ledit certificat d'authentification généré, ledit message étant appelé premier message, ledit second message étant transmis à ladite adresse électronique. Le procédé selon l'invention est ainsi particulièrement simple à mettre en oeuvre et compatible avec un grand nombre de systèmes existants.

Toujours selon un mode de réalisation particulier, le procédé comprend en outre une étape de conversion de protocoles lors de la transmission dudit certificat d'authentification généré et la réception dudit certificat d'authentification reçu. Le procédé selon l'invention peut ainsi être mis en oeuvre dans des environnements courant dans lesquels les protocoles utilisés par les équipements des utilisateurs sont différents de ceux des serveurs d'applications.

L'invention a également pour objet un procédé de requête d'initiation d'au moins un service d'un serveur d'applications avec au moins un équipement d'un utilisateur non abonné, ledit au moins un service mettant en oeuvre une pluralité d'équipements, chaque équipement de ladite pluralité d'équipements appartenant à un utilisateur d'une pluralité d'utilisateurs, au moins un utilisateur de ladite pluralité d'utilisateurs, appelé abonné, ayant souscrit audit au moins un service, ledit utilisateur non abonné, appelé non abonné, n'ayant pas souscrit audit au moins un service, ce procédé comprenant les étapes suivantes,
- transmission d'un identifiant dudit abonné à un système de cooptation pour générer un certificat d'authentification dudit abonné à partir dudit identifiant transmis et transmettre ledit certificat d'authentification généré à un équipement dudit non abonné ; et,
- initiation dudit au moins un service en fonction dudit identifiant dudit abonné si un certificat d'authentification provenant dudit au moins un équipement dudit non abonné est déterminé comme valide par ledit système de cooptation par rapport audit identifiant dudit abonné.

L'invention a aussi pour objet un procédé d'acceptation, par un équipement d'un utilisateur non abonné, de l'initiation d'au moins un service d'un serveur d'applications, ledit au moins un service mettant en oeuvre une pluralité d'équipements, chaque équipement de ladite pluralité d'équipements appartenant à un utilisateur d'une pluralité d'utilisateurs, au moins un utilisateur de ladite pluralité d'utilisateurs, appelé abonné, ayant souscrit audit au moins un service, ledit utilisateur non abonné n'ayant pas souscrit audit au moins un service, ce procédé comprenant les étapes suivantes,
- réception d'un certificat d'authentification généré à partir d'un identifiant dudit abonné, ledit certificat d'authentification étant reçu d'un système de cooptation ;
- retransmission dudit certificat d'authentification audit système de cooptation via ledit serveur d'application ; et,
- initiation dudit au moins un service en fonction dudit identifiant dudit abonné si ledit certificat d'authentification est déterminé comme valide par ledit système de cooptation par rapport audit identifiant dudit abonné.

L'invention a aussi pour objet un programme d'ordinateur comprenant des instructions adaptées à la mise en oeuvre de chacune des étapes de chacun des procédés décrits précédemment lorsque ledit programme est exécuté sur un ordinateur.

L'invention a également pour objet un système de cooptation permettant l'initiation d'au moins un service d'un serveur d'applications, ledit au moins un service mettant en oeuvre une pluralité d'équipements, chaque équipement de ladite pluralité d'équipements appartenant à un utilisateur d'une pluralité d'utilisateurs, au moins un utilisateur de ladite pluralité d'utilisateurs, appelé abonné, ayant souscrit audit au moins un service et au moins un utilisateur de ladite pluralité d'utilisateurs, appelé non abonné, n'ayant pas souscrit audit au moins un service, ce serveur de cooptation comprenant les moyens suivants,
- moyens pour générer un certificat d'authentification dudit abonné à partir d'un identifiant dudit abonné ;
- moyens pour transmettre ledit certificat d'authentification généré à un équipement dudit non abonné ;
- moyens pour recevoir un certificat d'authentification provenant dudit équipement dudit non abonné ;
- moyens pour déterminer la validité dudit certificat d'authentification reçu, la validité dudit certificat d'authentification reçu étant déterminée selon ledit identifiant dudit abonné ; et,
- moyens pour transmettre ledit identifiant dudit abonné si ledit certificat d'authentification reçu est valide, ledit identifiant dudit abonné permettant de lancer ledit au moins un service.

Selon un mode de réalisation particulier, le système comprend en outre des moyens pour recevoir un premier message d'un équipement dudit abonné, ledit premier message comprenant ledit identifiant dudit abonné et un identifiant dudit non abonné, ledit identifiant dudit non abonné étant une adresse électronique, et une étape de création d'un second message comprenant au moins ledit certificat d'authentification généré, ledit second message étant transmis à ladite adresse électronique.

L'invention a également pour objet un dispositif de requête d'initiation d'au moins un service d'un serveur d'applications avec au moins un équipement d'un utilisateur non abonné, ledit au moins un service mettant en oeuvre une pluralité d'équipements, chaque équipement de ladite pluralité d'équipements appartenant à un utilisateur d'une pluralité d'utilisateurs, au moins un utilisateur de ladite pluralité d'utilisateurs, appelé abonné, ayant souscrit audit au moins un service, ledit utilisateur non abonné, appelé non abonné, n'ayant pas souscrit audit au moins un service, ce dispositif comprenant les moyens suivants,
- moyens pour transmettre un identifiant dudit abonné à un système de cooptation pour générer un certificat d'authentification dudit abonné à partir dudit identifiant transmis et transmettre ledit certificat d'authentification généré à un équipement dudit non abonné ; et,
- moyens pour initier ledit au moins un service en fonction dudit identifiant dudit abonné si un certificat d'authentification provenant dudit au moins un équipement dudit non abonné est déterminé comme valide par ledit système de cooptation par rapport audit identifiant dudit abonné.

L'invention a aussi pour objet un dispositif d'acceptation, par un équipement d'un utilisateur non abonné, de l'initiation d'au moins un service d'un serveur d'applications, ledit au moins un service mettant en oeuvre une pluralité d'équipements, chaque équipement de ladite pluralité d'équipements appartenant à un utilisateur d'une pluralité d'utilisateurs, au moins un utilisateur de ladite pluralité d'utilisateurs, appelé abonné, ayant souscrit audit au moins un service, ledit utilisateur non abonné n'ayant pas souscrit audit au moins un service, ce dispositif comprenant les moyens suivants,
- moyens pour recevoir un certificat d'authentification généré à partir d'un identifiant dudit abonné, ledit certificat d'authentification étant reçu d'un système de cooptation ;
- moyens pour retransmettre ledit certificat d'authentification audit système de cooptation via ledit serveur d'application ; et,
- moyens pour initier ledit au moins un service en fonction dudit identifiant dudit abonné si ledit certificat d'authentification est déterminé comme valide par ledit système de cooptation par rapport audit identifiant dudit abonné.

Les avantages procurés par ces procédés, programmes d'ordinateur et systèmes sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- la figure 1 représente schématiquement un environnement permettant à des utilisateurs de partager un service de visioconférence ;
- la figure 2 illustre schématiquement un exemple d'environnement dans lequel peut être mise en oeuvre l'invention ainsi que certaines étapes mises en oeuvre conformément à un mode de réalisation de l'invention ;
- la figure 3 illustre certaines étapes mises en oeuvre dans le serveur de cooptation représenté sur la figure 2 ;
- la figure 4 illustre certaines étapes mises en oeuvre dans la passerelle représentée sur la figure 2 ; et,
- la figure 5 représente un exemple d'architecture matérielle adaptée à mettre en oeuvre certaines étapes de l'invention, notamment l'algorithme décrit en référence aux figures 3 et 4.

De façon générale, l'invention vise la mise en place d'un système permettant à un utilisateur d'un service d'un fournisseur de services particulier, abonné à ce service, de coopter un utilisateur n'étant pas abonné à ce service afin de lui donner un accès temporaire à celui-ci.

La figure 2 illustre schématiquement un exemple d'environnement 200 dans lequel peut être mise en oeuvre l'invention ainsi que certaines étapes mises en oeuvre conformément à un mode de réalisation de l'invention. Un utilisateur disposant d'un équipement 205 souhaite ici utiliser un service avec un utilisateur disposant d'un équipement 210. L'utilisateur disposant de l'équipement 205 dispose d'un abonnement auprès du fournisseur de services proposant le service considéré. Il est appelé, dans la suite de la description, l'utilisateur abonné ou l'abonné. A l'inverse, l'utilisateur disposant de l'équipement 210 ne dispose pas d'un abonnement auprès du fournisseur de services proposant le service considéré. Il est appelé, dans la suite de la description, l'utilisateur non-abonné ou le non abonné.

Les équipements 205 et 210 disposent chacun d'une connexion à un réseau de communication 215, par exemple un accès Internet. Ces équipements sont, par exemple, des ordinateurs de type PC, des terminaux de type *set-top box,* des tablettes ou des téléphones mobiles, notamment des téléphones mobiles de type *smartphone.*

L'équipement 205 de l'utilisateur abonné dispose ici d'une application particulière permettant de coopter un utilisateur afin de lui donner accès temporaire à un service (en relation avec un utilisateur abonné) même s'il n'est pas abonné au service considéré. Lorsqu'un utilisateur souhaite coopter un autre utilisateur, il lance cette application et saisie un identifiant de l'utilisateur à coopter, par exemple son adresse e-mail. Cette application a notamment pour objet la saisie ou la sélection d'un identifiant d'un utilisateur à coopter et la transmission de cet identifiant (et d'un identifiant de l'utilisateur de l'application) à une adresse prédéterminée.

Comme illustré sur la figure 2, cet identifiant ainsi qu'un identifiant de l'utilisateur abonné sont transmis par l'équipement de l'utilisateur abonné à un serveur particulier (étape 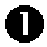 ), ici le serveur de cooptation 220, par exemple un serveur web (noté CWS, sigle de *Cooptation Web Server* en terminologie anglo-saxonne). L'identifiant de l'utilisateur abonné transmis au serveur 220 est typiquement un identifiant de visioconférence tel qu'un numéro de téléphone ou une adresse réseau d'un équipement.

Le serveur de cooptation 220 génère alors un certificat d'authentification (appelé *credential* en terminologie anglo-saxonne), pouvant avoir une validité temporaire, sous forme d'un jeton (appelé *token* en terminologie anglo-saxonne). Un tel certificat d'authentification est, par exemple, généré à partir d'une fonction cryptographique standard. Ce certificat ainsi que l'identifiant de l'utilisateur abonné sont mémorisés dans le serveur de cooptation 220. Selon un mode de réalisation particulier, ce certificat ainsi que l'identifiant de l'utilisateur abonné sont effacés du serveur de cooptation au bout d'un temps donné (durée de validité du certificat).

En parallèle, un lien vers une passerelle (ici la passerelle 225), par exemple un lien de type URL (sigle *d'Uniform Resource Locator* en terminologie anglo-saxonne), est créé. La passerelle visée par ce lien comprend elle-même une application permettant, lors de la réception d'un jeton d'authentification, d'accéder, via un serveur d'applications (ici le serveur d'applications 230 et noté AWS, sigle *d'Application Web Server* en terminologie anglo-saxonne), à un outil de vérification du serveur de cooptation 220 ayant notamment pour objet de vérifier la validité d'un certificat d'authentification temporaire et de retrouver un identifiant d'utilisateur abonné correspondant. Ainsi, la passerelle utilisée ici intègre une logique de services habituellement mise en oeuvre dans des serveurs d'applications.

Un message, par exemple un message électronique (appelé *e-mail* en terminologie anglo-saxonne), comprenant ce lien et ce jeton est alors créé. Le lien peut notamment être inséré dans le message sous forme de lien cliquable, par exemple sous forme d'un lien de type URL ayant pour cible une application de type Flash (Flash est une marque d'Adobe) hébergée sur le serveur d'applications 230. Le message est ensuite adressé à l'adresse de l'utilisateur non abonné (étape 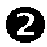 ), reçue par le serveur de cooptation de l'utilisateur abonné (ou, plus généralement, à une adresse déterminée à partir d'un identifiant reçu de l'utilisateur non abonné).

Après avoir reçu le message, l'utilisateur non abonné peut activer le lien reçu, typiquement en cliquant sur ce lien. L'application logicielle utilisée pour ouvrir le message reçu, par exemple, le logiciel de messagerie, déclenche alors l'ouverture d'une fenêtre d'un navigateur, par exemple d'un navigateur Internet, et initie une connexion vers la passerelle visée dans le lien (étape 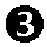 ), ici la passerelle 225.

La passerelle 225 (noté GW, sigle *GateWay* en terminologie anglo-saxonne) est ici une passerelle capable d'établir un lien entre le protocole Flash utilisé par l'équipement 210 et le protocole SIP (sigle de *Session Initiation Protocol* en terminologie anglo-saxonne) généralement utilisé dans les serveurs d'applications mis en oeuvre par les fournisseurs de services, notamment pour offrir des services multimédia tels que des services de visioconférence.

La passerelle 225 adresse alors une requête comprenant le jeton reçu au serveur de cooptation 220 via le serveur d'applications 230 (étapes 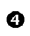 et 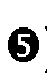 ). En réponse à la réception de la requête, le serveur de cooptation 220 authentifie le jeton reçu selon un algorithme standard (en fonction de l'algorithme utilisé pour généré le jeton) et, le cas échéant, si le jeton est authentifié et valide, détermine l'identifiant de l'utilisateur abonné correspondant à ce jeton, à l'origine du processus. L'identifiant de l'utilisateur abonné est alors transmis par le serveur de cooptation 220 à la passerelle 225 via le serveur d'applications 230 (étapes 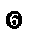 et 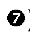 ). A partir de cet identifiant de l'utilisateur abonné, la passerelle 225 peut initier le service impliquant les équipements 205 et 210. En particulier, la passerelle 225 peut initier une communication audio-vidéo de l'équipement 210 vers l'équipement 205 (référence 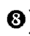 ).

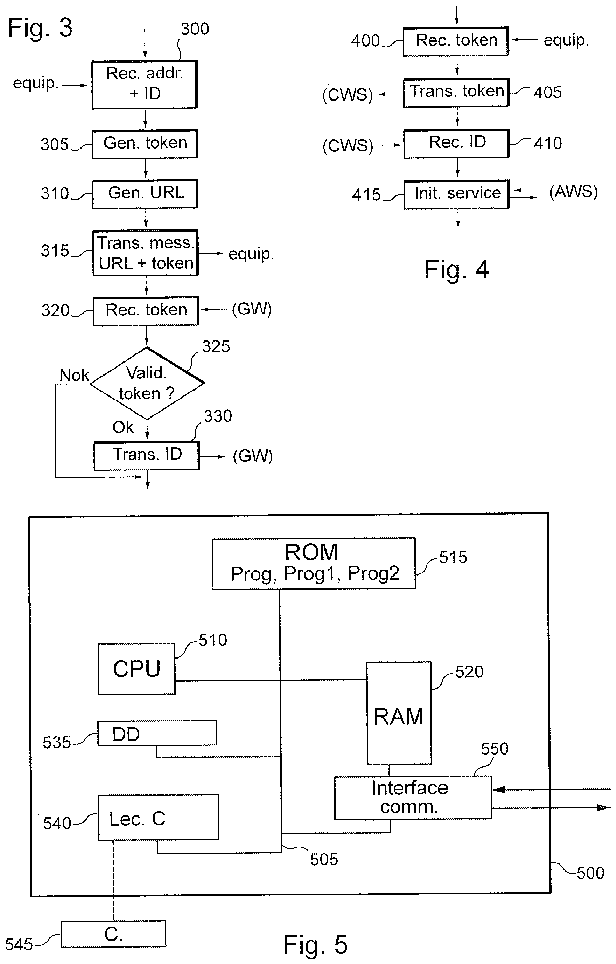

La figure 3 illustre plus précisément certaines étapes mises en oeuvre dans le serveur de cooptation 220 représenté sur la figure 2. Comme illustré, une première étape (étape 300) a pour objet de recevoir une requête comprenant un identifiant (noté *ID*) de l'utilisateur de l'équipement à l'origine de la requête et un identifiant (noté *addr.*) d'un ou de plusieurs utilisateurs d'équipements, à qui l'utilisateur de l'équipement à l'origine de la requête veut donner accès, temporairement, à un service auquel il a souscrit. L'identifiant de l'utilisateur de l'équipement à l'origine de la requête est typiquement un identifiant d'utilisateur de visioconférence, par exemple un numéro de téléphone ou une adresse réseau. L'identifiant d'un utilisateur d'un équipement à qui l'utilisateur de l'équipement à l'origine de la requête veut donner accès, temporairement, à un service auquel il a souscrit, peut notamment consister en une adresse de messagerie électronique tel qu'une adresse électronique (aussi appelée adresse *e-mail*).

Dans une étape suivante (étape 305), un certificat d'authentification lié à l'utilisateur de l'équipement à l'origine de la requête reçue précédemment est généré sous forme de jeton (*token*)*,* c'est-à-dire d'une chaîne de caractère ayant un format prédéterminé. Un tel certificat peut être obtenu en appliquant une fonction cryptographique, par exemple une fonction de hachage tel que les fonctions connues sous le nom de SHA-2 et MD5, à l'identifiant de l'utilisateur de l'équipement à l'origine de la requête. La date de création du jeton et, éventuellement, le jeton sont mémorisés par le serveur de cooptation en lien avec les identifiants de l'utilisateur de l'équipement à l'origine de la requête et du ou des utilisateurs d'équipements à qui l'utilisateur de l'équipement à l'origine de la requête veut donner accès, temporairement, à un service auquel il a souscrit. Selon un mode de réalisation particulier, ces informations sont automatiquement effacées, par exemple après un délai prédéterminé, c'est-à-dire lorsque la différence entre la date de création mémorisée et la date actuelle excède un seuil prédéterminé, après utilisation de celles-ci ou selon un autre critère.

Un lien de type URL est alors généré (étape 310) pour permettre d'accéder à une application prédéterminée. Un tel lien comprend typiquement une adresse d'un serveur ou d'une passerelle dans lequel l'application visée est disponible ainsi que le nom de cette application. Ce lien est, de préférence, généré dans un format standard prédéterminé permettant son activation sur un nombre important de plateformes de telle sorte qu'il puisse être activé par un très grand nombre d'utilisateurs sans nécessiter d'installation particulière (outre une installation par défaut d'une application telle qu'un navigateur Internet standard). Selon un mode de réalisation particulier, ce lien est généré sous forme d'une URL visant une application de type Flash.

Il est observé ici que si le lien a été préalablement créé et/ou mémorisé, il peut être directement retrouvé sans qu'il soit réellement créé à nouveau.

Un message comprenant le jeton et le lien générés est alors créé et transmis (étape 315) à un ou à des équipements selon les identifiants du ou des utilisateurs d'équipements à qui l'utilisateur de l'équipement à l'origine de la requête précédemment reçue veut donner accès, temporairement, à un service auquel il a souscrit. Il est observé ici que le message transmis ne comprend pas l'identifiant de l'utilisateur de l'équipement à l'origine de la requête reçue.

Dans une étape suivante, une connexion est établie entre le serveur de cooptation (*CWS*) et une passerelle (GW, *gateway),* sur requête de cette dernière qui transmet alors un jeton (étape 320). Un test est alors effectué (étape 325) pour déterminer si le certificat d'authentification correspondant au jeton reçu est valide. A ces fins, le certificat d'authentification est, le cas échéant, comparé à des certificats d'authentification préalablement mémorisés ou comparé aux identifiants d'utilisateurs d'équipement à l'origine de requêtes reçues par le serveur de cooptation auxquels sont appliquées les fonctions utilisées pour générer les certificats d'authentification. En outre, selon un mode de réalisation particulier, la date de réception du jeton est comparée à la date de création du certificat d'authentification correspondant. Celle-ci peut avoir été mémorisée en lien avec le certificat d'authentification ou en lien avec les identifiants de l'utilisateur d'un équipement à l'origine d'une requête et du ou des utilisateurs d'équipements à qui l'utilisateur de cet équipement à l'origine de la requête veut donner accès, temporairement, à un service auquel il a souscrit.

Si le jeton est valide, c'est-à-dire si le certificat d'authentification associé correspond à un identifiant d'un utilisateur d'un équipement à l'origine d'une requête reçue par le serveur de cooptation et s'il n'a pas expiré, c'est-à-dire si la durée entre la date de création du certificat d'authentification et la date de réception du jeton associé par le serveur de cooptation n'excède pas un seuil prédéterminé, l'identifiant de l'utilisateur à l'origine d'une requête reçue par le serveur de cooptation, correspondant au jeton reçu, est transmis à la passerelle de laquelle le jeton a été reçu (étape 330). Si le jeton n'est pas valide, cet identifiant n'est pas transmis.

Les échanges de données entre le serveur de cooptation et la passerelle de laquelle un jeton est reçu et à laquelle un identifiant est, le cas échéant, transmis est réalisé selon un protocole standard, par exemple le protocole SIP.

La figure 4 illustre certaines étapes mises en oeuvre dans la passerelle 225 représentées sur la figure 2. Dans une première étape (étape 400), un jeton est reçu d'un équipement selon un protocole standard, de préférence basé sur une technologie très largement répandue et pouvant être utilisé par un grand nombre d'équipements utilisés par des utilisateurs, tel que Flash. A ces fins, une communication est préalablement établie entre cet équipement et la passerelle, sur requête de l'équipement, en utilisant un lien prédéterminé préalablement reçu. Ce lien permet l'activation de l'application qui reçoit le jeton. Elle mémorise également un identifiant de l'équipement reçu lors de l'établissement de la connexion, pour, le cas échéant, initier un service mettant en oeuvre cet équipement.

Le jeton reçu est alors transmis à un serveur de cooptation (CWS), de préférence connu de l'application mise en oeuvre dans la passerelle (étape 405), via un serveur d'applications (non représenté), conformément à un protocole de communication adapté aux services proposés par le serveur d'applications, par exemple le protocole SIP.

En réponse, si le jeton transmis est valide, la passerelle reçoit du serveur de cooptation, via le serveur d'applications, un identifiant d'un utilisateur d'un équipement abonné à un service proposé par le serveur d'applications (étape 410).

En utilisant cet identifiant et l'identifiant de l'équipement duquel la passerelle a reçu le jeton, la passerelle initie un service mis en oeuvre par le serveur d'applications (étape 415), par exemple une communication audio-vidéo entre les équipements des utilisateurs ainsi identifiés.

Il convient de noter ici que si l'utilisation d'une passerelle peut être nécessaire si le protocole utilisé entre le serveur de cooptation et le serveur d'applications est différent du protocole utilisé par l'équipement de l'utilisateur non abonné, une telle passerelle n'est pas nécessaire si ces protocoles sont les mêmes. Dans ce cas, le lien reçu par l'équipement de l'utilisateur non abonné est un lien vers une application mise en oeuvre dans le serveur d'applications utilisé pour mettre en oeuvre le service visé. Par ailleurs, la passerelle peut être intégrée ou partiellement intégrée au serveur d'applications.

De même, le serveur de cooptation peut être intégré au serveur d'applications.

Ainsi, le serveur de cooptation, le serveur d'applications et la passerelle peuvent être implémentés dans des dispositifs distincts, comme illustré sur la figure 2, répartis dans plusieurs dispositifs ou intégrés dans deux ou un seul dispositifs. Ainsi, par exemple, une, plusieurs ou toutes les fonctionnalités du serveur de cooptation peuvent être mises en oeuvre dans le serveur d'applications et/ou dans la passerelle.

La figure 5 illustre un exemple d'architecture matérielle d'un dispositif 500 adapté à mettre en oeuvre certaines étapes de l'invention, en particulier les étapes décrites en référence aux figures 3 et 4. Il comporte ici un bus de communication 505 auquel sont reliés :
- une ou plusieurs unités centrales de traitement ou microprocesseurs 510 (CPU) ;
- une mémoire morte 515 (ROM, acronyme de *Read Only Memory* en terminologie anglo-saxonne) pouvant comporter des programmes (prog, prog1 et prog2) nécessaires à la mise en oeuvre de l'invention ;
- une mémoire vive ou mémoire cache 520 (RAM, acronyme de *Random Access Memory* en terminologie anglo-saxonne) comportant des registres adaptés à enregistrer des variables et paramètres créés et modifiés au cours de l'exécution des programmes précités ; et
- une interface de communication 550 (Interface comm.) adaptée à transmettre et à recevoir des données.

Le dispositif 500 dispose également, de préférence, d'un disque dur 535 (DD) pouvant comporter les programmes précités ainsi que des informations traitées ou à traiter selon l'invention et d'un lecteur de cartes mémoires 540 (Lec. C) adapté à recevoir une carte mémoire 545 (C) et à y lire ou à y écrire des données traitées ou à traiter selon l'invention.

Le bus de communication permet la communication et l'interopérabilité entre les différents éléments inclus dans le dispositif 500 ou reliés à lui. La représentation du bus n'est pas limitative et, notamment, l'unité centrale est susceptible de communiquer des instructions à tout élément du dispositif 500 directement ou par l'intermédiaire d'un autre élément du dispositif 500.

Le code exécutable de chaque programme permettant au dispositif programmable de mettre en oeuvre les processus selon l'invention, peut être stocké, par exemple, dans le disque dur 535 ou en mémoire morte 515.

Selon une variante, la carte mémoire 545 peut contenir des informations, notamment des informations à traiter selon l'invention, ainsi que le code exécutable des programmes précités qui, une fois lu par le dispositif 500, est stocké dans le disque dur 535.

Selon une autre variante, le code exécutable des programmes et les informations à traiter selon l'invention pourront être reçus, au moins partiellement, par l'intermédiaire de l'interface 550, pour être stocké de façon identique à celle décrite précédemment.

De manière plus générale, le ou les programmes ainsi que les informations à traiter selon l'invention pourront être chargés dans un des moyens de stockage du dispositif 500 avant d'être exécutés.

L'unité centrale 510 va commander et diriger l'exécution des instructions ou portions de code logiciel du ou des programmes selon l'invention, instructions qui sont stockées dans le disque dur 535 ou dans la mémoire morte 515 ou bien dans les autres éléments de stockage précités. Lors de la mise sous tension, le ou les programmes qui sont stockés dans une mémoire non volatile, par exemple le disque dur 535 ou la mémoire morte 515, sont transférés dans la mémoire vive 520 qui contient alors le code exécutable du ou des programmes selon l'invention, ainsi que des registres pour mémoriser les variables et paramètres nécessaires à la mise en oeuvre de l'invention.

Naturellement, pour satisfaire des besoins spécifiques, une personne compétente dans le domaine de l'invention pourra appliquer des modifications dans la description précédente.

## Revendications

1. Procédé d'initiation d'au moins un service d'un serveur d'applications (230), ledit au moins un service mettant en oeuvre une pluralité d'équipements (205, 210), chaque équipement de ladite pluralité d'équipements appartenant à un utilisateur d'une pluralité d'utilisateurs, au moins un utilisateur de ladite pluralité d'utilisateurs, appelé abonné, ayant souscrit audit au moins un service et au moins un utilisateur de ladite pluralité d'utilisateurs, appelé non abonné, n'ayant pas souscrit audit au moins un service, ce procédé étant **caractérisé en ce qu'**il comprend les étapes suivantes,
- génération (305) par un système de cooptation d'un certificat d'authentification dudit abonné à partir d'un identifiant dudit abonné ;
- transmission (315) dudit certificat d'authentification dudit abonné généré à un équipement dudit non abonné ;
- réception (320) par le système de cooptation d'un certificat d'authentification provenant dudit équipement dudit non abonné ;
- détermination (325) de la validité dudit certificat d'authentification reçu, la validité dudit certificat d'authentification reçu étant déterminée selon ledit identifiant dudit abonné ;
- si ledit certificat d'authentification reçu est valide, transmission (330) par le système de cooptation dudit identifiant dudit abonné, ledit identifiant dudit abonné permettant d'initier ledit au moins un service.

2. Procédé selon la revendication 1 selon lequel ladite étape de transmission dudit certificat d'authentification dudit abonné généré comprend une étape de transmission d'un lien avec ledit certificat d'authentification dudit abonné généré, ledit lien permettant d'accéder au dispositif mettant en oeuvre ledit procédé pour lui transmettre ledit certificat d'authentification dudit abonné.

3. Procédé selon la revendication 2 comprenant en outre une étape de création (310) dudit lien selon un format standard.

4. Procédé selon l'une quelconque des revendications précédentes selon lequel ladite étape de détermination de la validité dudit certificat d'authentification reçu comprend une étape de comparaison de la date de réception dudit certificat d'authentification reçu avec un seuil prédéterminé.

5. Procédé selon l'une quelconque des revendications précédentes comprenant en outre une étape de réception (300) par le système de cooptation d'un message d'un équipement dudit abonné, ledit message comprenant ledit identifiant dudit abonné et un identifiant dudit non abonné, ledit certificat d'authentification dudit abonné généré étant transmis audit équipement dudit non abonné selon ledit identifiant dudit non abonné.

6. Procédé selon la revendication 5, ledit identifiant dudit non abonné étant une adresse électronique, le procédé comprenant en outre une étape de création d'un second message comprenant au moins ledit certificat d'authentification dudit abonné généré, ledit message étant appelé premier message, ledit second message étant transmis à ladite adresse électronique.

7. Procédé selon l'une quelconque des revendications précédentes comprenant en outre une étape de conversion de protocoles lors de la transmission dudit certificat d'authentification dudit abonné généré et la réception dudit certificat d'authentification reçu.

8. Procédé de requête d'initiation d'au moins un service d'un serveur d'applications (230) avec au moins un équipement d'un utilisateur non abonné, ledit au moins un service mettant en oeuvre une pluralité d'équipements (205, 210), chaque équipement de ladite pluralité d'équipements appartenant à un utilisateur d'une pluralité d'utilisateurs, au moins un utilisateur de ladite pluralité d'utilisateurs, appelé abonné, ayant souscrit audit au moins un service, ledit utilisateur non abonné, appelé non abonné, n'ayant pas souscrit audit au moins un service, ce procédé étant **caractérisé en ce qu'**il comprend les étapes suivantes,
- transmission d'un identifiant dudit abonné à un système de cooptation pour générer (305) un certificat d'authentification dudit abonné à partir dudit identifiant transmis et transmettre (315) ledit certificat d'authentification dudit abonné généré à un équipement dudit non abonné ; et,
- initiation dudit au moins un service en fonction dudit identifiant dudit abonné si un certificat d'authentification provenant dudit au moins un équipement dudit non abonné est déterminé comme valide par ledit système de cooptation par rapport audit identifiant dudit abonné.

9. Procédé d'acceptation, par un équipement d'un utilisateur non abonné, de l'initiation d'au moins un service d'un serveur d'applications (230), ledit au moins un service mettant en oeuvre une pluralité d'équipements (205, 210), chaque équipement de ladite pluralité d'équipements appartenant à un utilisateur d'une pluralité d'utilisateurs, au moins un utilisateur de ladite pluralité d'utilisateurs, appelé abonné, ayant souscrit audit au moins un service, ledit utilisateur non abonné n'ayant pas souscrit audit au moins un service, ce procédé étant **caractérisé en ce qu'**il comprend les étapes suivantes,
- réception par ledit équipement d'un utilisateur non abonné d'un certificat d'authentification dudit abonné généré à partir d'un identifiant dudit abonné, ledit certificat d'authentification étant reçu d'un système de cooptation ;
- retransmission dudit certificat d'authentification dudit abonné audit système de cooptation via ledit serveur d'application ; et,
- initiation dudit au moins un service en fonction dudit identifiant dudit abonné si ledit certificat d'authentification dudit abonné est déterminé comme valide par ledit système de cooptation par rapport audit identifiant dudit abonné.

10. Programme d'ordinateur comprenant des instructions adaptées à la mise en oeuvre de chacune des étapes du procédé selon l'une quelconque des revendications précédentes lorsque ledit programme est exécuté sur un ordinateur.

11. Système de cooptation permettant l'initiation d'au moins un service d'un serveur d'applications (230), ledit au moins un service mettant en oeuvre une pluralité d'équipements (205, 210), chaque équipement de ladite pluralité d'équipements appartenant à un utilisateur d'une pluralité d'utilisateurs, au moins un utilisateur de ladite pluralité d'utilisateurs, appelé abonné, ayant souscrit audit au moins un service et au moins un utilisateur de ladite pluralité d'utilisateurs, appelé non abonné, n'ayant pas souscrit audit au moins un service, ce système de cooptation étant **caractérisé en ce qu'**il comprend les moyens suivants,
- moyens pour générer un certificat d'authentification dudit abonné à partir d'un identifiant dudit abonné ;
- moyens pour transmettre ledit certificat d'authentification dudit abonné généré à un équipement dudit non abonné ;
- moyens pour recevoir un certificat d'authentification provenant dudit équipement dudit non abonné ;
- moyens pour déterminer la validité dudit certificat d'authentification reçu, la validité dudit certificat d'authentification reçu étant déterminée selon ledit identifiant dudit abonné ; et,
- moyens pour transmettre ledit identifiant dudit abonné si ledit certificat d'authentification reçu est valide, ledit identifiant dudit abonné permettant de lancer ledit au moins un service.

12. Système de cooptation selon la revendication 11 comprenant en outre des moyens pour recevoir un premier message d'un équipement dudit abonné, ledit premier message comprenant ledit identifiant dudit abonné et un identifiant dudit non abonné, ledit identifiant dudit non abonné étant une adresse électronique, et une étape de création d'un second message comprenant au moins ledit certificat d'authentification généré, ledit second message étant transmis à ladite adresse électronique.

13. Dispositif de requête d'initiation d'au moins un service d'un serveur d'applications (230) avec au moins un équipement d'un utilisateur non abonné, ledit au moins un service mettant en oeuvre une pluralité d'équipements (205, 210), chaque équipement de ladite pluralité d'équipements appartenant à un utilisateur d'une pluralité d'utilisateurs, au moins un utilisateur de ladite pluralité d'utilisateurs, appelé abonné, ayant souscrit audit au moins un service, ledit utilisateur non abonné, appelé non abonné, n'ayant pas souscrit audit au moins un service, ce dispositif étant **caractérisé en ce qu'**il comprend les moyens suivants,
- moyens pour transmettre un identifiant dudit abonné à un système de cooptation pour générer (305) un certificat d'authentification dudit abonné à partir dudit identifiant transmis et transmettre (315) ledit certificat d'authentification dudit abonné généré à un équipement dudit non abonné ; et,
- moyens pour initier ledit au moins un service en fonction dudit identifiant dudit abonné si un certificat d'authentification provenant dudit au moins un équipement dudit non abonné est déterminé comme valide par ledit système de cooptation par rapport audit identifiant dudit abonné.

14. Dispositif d'acceptation, par un équipement d'un utilisateur non abonné, de l'initiation d'au moins un service d'un serveur d'applications (230), ledit au moins un service mettant en oeuvre une pluralité d'équipements (205, 210), chaque équipement de ladite pluralité d'équipements appartenant à un utilisateur d'une pluralité d'utilisateurs, au moins un utilisateur de ladite pluralité d'utilisateurs, appelé abonné, ayant souscrit audit au moins un service, ledit utilisateur non abonné n'ayant pas souscrit audit au moins un service, ce dispositif étant **caractérisé en ce qu'**il comprend les moyens suivants,
- moyens pour recevoir un certificat d'authentification dudit abonné généré à partir d'un identifiant dudit abonné, ledit certificat d'authentification dudit abonné étant reçu d'un système de cooptation ;
- moyens pour retransmettre ledit certificat d'authentification dudit abonné audit système de cooptation via ledit serveur d'application ; et,
- moyens pour initier ledit au moins un service en fonction dudit identifiant dudit abonné si ledit certificat d'authentification dudit abonné est déterminé comme valide par ledit système de cooptation par rapport audit identifiant dudit abonné.

## Patentansprüche

1. Verfahren zur Initiierung mindestens eines Dienstes eines Anwendungsservers (230), wobei der mindestens eine Dienst eine Vielzahl von Ausrüstungen (205, 210) einsetzt, wobei jede Ausrüstung der Vielzahl von Ausrüstungen einem Benutzer einer Vielzahl von Benutzern angehört, wobei mindestens ein Benutzer der Vielzahl von Benutzern, Abonnent genannt, den mindestens einen Dienst beantragt hat, und mindestens ein Benutzer der Vielzahl von Benutzern, Nicht-Abonnent genannt, den mindestens einen Dienst nicht beantragt hat, wobei dieses Verfahren **dadurch gekennzeichnet ist, dass** es die folgenden Schritte umfasst:
- durch ein Kooptationssystem Erzeugung (305) eines Authentifizierungszertifikats des Abonnenten auf Basis eines Identifikators des Abonnenten;
- Übertragung (315) des erzeugten Authentifizierungszertifikats des Abonnenten an eine Ausrüstung des Nicht-Abonnenten;
- durch das Kooptationssystem Erhalt (320) eines Authentifizierungszertifikats, das von der Ausrüstung des Nicht-Abonnenten kommt;
- Bestimmung (325) der Gültigkeit des erhaltenen Authentifizierungszertifikats, wobei die Gültigkeit des erhaltenen Authentifizierungszertifikats nach dem Identifikator des Abonnenten bestimmt wird;
- wenn das erhaltene Authentifizierungszertifikat gültig ist, Übertragung (330) des Identifikators des Abonnenten durch das Kooptationssystem, wobei es der Identifikator des Abonnenten ermöglicht, den mindestens einen Dienst zu initiieren.

2. Verfahren nach Anspruch 1, bei dem der Schritt der Übertragung des erzeugten Authentifizierungszertifikats des Abonnenten einen Schritt der Übertragung eines Links mit dem erzeugten Authentifizierungszertifikat des Abonnenten umfasst, wobei es der Link ermöglicht, auf die Vorrichtung, die das Verfahren einsetzt, zuzugreifen, um an sie das Authentifizierungszertifikat des Abonnenten zu übertragen.

3. Verfahren nach Anspruch 2, ferner umfassend einen Schritt der Erzeugung (310) des Links nach einem Standardformat.

4. Verfahren nach einem der vorhergehenden Ansprüche, bei dem der Schritt der Bestimmung der Gültigkeit des erhaltenen Authentifizierungszertifikats einen Schritt des Vergleichs des Empfangsdatums des erhaltenen Authentifizierungszertifikats mit einer vorbestimmten Schwelle umfasst.

5. Verfahren nach einem der vorhergehenden Ansprüche, ferner umfassend einen Schritt (300) des Erhalts einer Botschaft von einer Ausrüstung des Abonnenten durch das Kooptationssystem, wobei die Botschaft den Identifikator des Abonnenten und einen Identifikator des Nicht-Abonnenten umfasst, wobei das erzeugte Authentifizierungszertifikat des Abonnenten an die Ausrüstung des Nicht-Abonnenten gemäß dem Identifikator des Nicht-Abonnenten übertragen wird.

6. Verfahren nach Anspruch 5, wobei der Identifikator des Nicht-Abonnenten eine E-Mail-Adresse ist, wobei das Verfahren ferner einen Schritt der Erzeugung einer zweiten Botschaft, umfassend mindestens das erzeugte Authentifizierungszertifikat des Abonnenten, umfasst, wobei die Botschaft erste Botschaft genannt wird, wobei die zweite Botschaft an die E-Mail-Adresse übertragen wird.

7. Verfahren nach einem der vorhergehenden Ansprüche, ferner umfassend einen Schritt der Protokollumwandlung bei der Übertragung des erzeugten Authentifizierungszertifikats des Abonnenten und den Erhalt des erhaltenen Authentifizierungszertifikats.

8. Verfahren zur Anforderung der Initiierung mindestens eines Dienstes eines Anwendungsservers (230) mit mindestens einer Ausrüstung eines nicht abonnierten Benutzers, wobei der mindestens eine Dienst eine Vielzahl von Ausrüstungen (205, 210) einsetzt, wobei jede Ausrüstung der Vielzahl von Ausrüstungen einem Benutzer einer Vielzahl von Benutzern angehört, wobei mindestens ein Benutzer der Vielzahl von Benutzern, Abonnent genannt, den mindestens einen Dienst beantragt hat, und der nicht abonnierte Benutzer, Nicht-Abonnent genannt, den mindestens einen Dienst nicht beantragt hat, wobei dieses Verfahren **dadurch gekennzeichnet ist, dass** es die folgenden Schritte umfasst:
- Übertragung eines Identifikators des Abonnenten an ein Kooptationssystem, um ein Authentifizierungszertifikat des Abonnenten auf Basis des übertragenen Identifikators zu erzeugen (305), und das erzeugte Authentifizierungszertifikat des Abonnenten an eine Ausrüstung des Nicht-Abonnenten zu übertragen (315); und
- Initiierung des mindestens einen Dienstes in Abhängigkeit von dem Identifikator des Abonnenten, wenn ein Authentifizierungszertifikat, das von der mindestens einen Ausrüstung des Nicht-Abonnenten kommt, von dem Kooptationssystem in Bezug auf den Identifikator des Abonnenten für gültig bestimmt wird.

9. Verfahren zur Annahme der Initiierung mindestens eines Dienstes eines Anwendungsservers (230) durch eine Ausrüstung eines nicht abonnierten Benutzers, wobei der mindestens eine Dienst eine Vielzahl von Ausrüstungen (205, 210) einsetzt, wobei jede Ausrüstung der Vielzahl von Ausrüstungen einem Benutzer einer Vielzahl von Benutzern angehört, wobei mindestens ein Benutzer der Vielzahl von Benutzern, Abonnent genannt, den mindestens einen Dienst beantragt hat, und der nicht abonnierte Benutzer den mindestens einen Dienst nicht beantragt hat, wobei dieses Verfahren **dadurch gekennzeichnet ist, dass** es die folgenden Schritte umfasst:
- durch die Ausrüstung eines nicht abonnierten Benutzers Erhalt eines Authentifizierungszertifikats des Abonnenten, das auf Basis eines Identifikators des Abonnenten erzeugt wurde, wobei das Authentifizierungszertifikat von einem Kooptationssystem erhalten wird;
- Rückübertragung des Authentifizierungszertifikats des Abonnenten an das Kooptationssystem über den Anwendungsserver; und
- Initiierung des mindestens einen Dienstes in Abhängigkeit von dem Identifikator des Abonnenten, wenn das Authentifizierungszertifikat des Abonnenten von dem Kooptationssystem in Bezug auf den Identifikator des Abonnenten für gültig bestimmt wird.

10. Computerprogramm, umfassend Instruktionen, die an den Einsatz jedes der Schritte des Verfahrens nach einem der vorhergehenden Ansprüche angepasst sind, wenn das Programm auf einem Computer ausgeführt wird.

11. Kooptationssystem, das die Initiierung mindestens eines Dienstes eines Anwendungsservers (230) ermöglicht, wobei der mindestens eine Dienst eine Vielzahl von Ausrüstungen (205, 210) einsetzt, wobei jede Ausrüstung der Vielzahl von Ausrüstungen einem Benutzer einer Vielzahl von Benutzern angehört, wobei mindestens ein Benutzer der Vielzahl von Benutzern, Abonnent genannt, den mindestens einen Dienst beantragt hat, und mindestens ein Benutzer der Vielzahl von Benutzern, Nicht-Abonnent genannt, den mindestens einen Dienst nicht beantragt hat, wobei dieser Kooptationssystem **dadurch gekennzeichnet ist, dass** er die folgenden Mittel umfasst:
- Mittel, um ein Authentifizierungszertifikat des Abonnenten auf Basis eines Identifikators des Abonnenten zu erzeugen;
- Mittel, um das erzeugte Authentifizierungszertifikat des Abonnenten an eine Ausrüstung des Nicht-Abonnenten zu übertragen;
- Mittel, um ein Authentifizierungszertifikat zu erhalten, das von der Ausrüstung des Nicht-Abonnenten kommt;
- Mittel, um die Gültigkeit des erhaltenen Authentifizierungszertifikats zu bestimmen, wobei die Gültigkeit des erhaltenen Authentifizierungszertifikats gemäß dem Identifikator des Abonnenten bestimmt wird; und
- Mittel, um den Identifikator des Abonnenten zu übertragen, wenn das erhaltene Authentifizierungszertifikat gültig ist, wobei es der Identifikator des Abonnenten ermöglicht, den mindestens einen Dienst zu starten.

12. Kooptationssystem nach Anspruch 11, ferner umfassend Mittel, um eine erste Botschaft von einer Ausrüstung des Abonnenten zu erhalten, wobei die erste Botschaft den Identifikator des Abonnenten und einen Identifikator des Nicht-Abonnenten umfasst, wobei der Identifikator des Nicht-Abonnenten eine E-Mail-Adresse ist, und umfassend einen Schritt der Erzeugung einer zweiten Botschaft, umfassend mindestens das erzeugte Authentifizierungszertifikat, wobei die zweite Botschaft an die E-Mail-Adresse übertragen wird.

13. Vorrichtung zur Anforderung der Initiierung mindestens eines Dienstes eines Anwendungsservers (230) mit mindestens einer Ausrüstung eines nicht abonnierten Benutzers, wobei der mindestens eine Dienst eine Vielzahl von Ausrüstungen (205, 210) einsetzt, wobei jede Ausrüstung der Vielzahl von Ausrüstungen einem Benutzer einer Vielzahl von Benutzern angehört, wobei mindestens ein Benutzer der Vielzahl von Benutzern, Abonnent genannt, den mindestens einen Dienst beantragt hat, und der nicht abonnierte Benutzer, Nicht-Abonnent genannt, den mindestens einen Dienst nicht beantragt hat, wobei diese Vorrichtung **dadurch gekennzeichnet ist, dass** sie die folgenden Mittel umfasst:
- Mittel zur Übertragung eines Identifikators des Abonnenten an ein Kooptationssystem, um ein Authentifizierungszertifikat des Abonnenten auf Basis des übertragenen Identifikators zu erzeugen (305), und das erzeugte Authentifizierungszertifikat des Abonnenten an eine Ausrüstung des Nicht-Abonnenten zu übertragen (315); und
- Mittel zur Initiierung des mindestens einen Dienstes in Abhängigkeit von dem Identifikator des Abonnenten, wenn ein Authentifizierungszertifikat, das von der mindestens einen Ausrüstung des Nicht-Abonnenten kommt, von dem Kooptationssystem in Bezug auf den Identifikator des Abonnenten für gültig bestimmt wird.

14. Vorrichtung zur Annahme der Initiierung mindestens eines Dienstes eines Anwendungsservers (230) durch eine Ausrüstung eines nicht abonnierten Benutzers, wobei der mindestens eine Dienst eine Vielzahl von Ausrüstungen (205, 210) einsetzt, wobei jede Ausrüstung der Vielzahl von Ausrüstungen einem Benutzer einer Vielzahl von Benutzern angehört, wobei mindestens ein Benutzer der Vielzahl von Benutzern, Abonnent genannt, den mindestens einen Dienst beantragt hat, und der nicht abonnierte Benutzer den mindestens einen Dienst nicht beantragt hat, wobei diese Vorrichtung **dadurch gekennzeichnet ist, dass** sie die folgenden Mittel umfasst:
- Mittel zum Erhalt eines erzeugten Authentifizierungszertifikats des Abonnenten, wobei das Authentifizierungszertifikat von einem Kooptationssystem erhalten wird;
- Mittel zur Rückübertragung des Authentifizierungszertifikats des Abonnenten an das Kooptationssystem über den Anwendungsserver; und
- Mittel zur Initiierung des mindestens einen Dienstes in Abhängigkeit von dem Identifikator des Abonnenten, wenn das Authentifizierungszertifikat des Abonnenten von dem Kooptationssystem in Bezug auf den Identifikator des Abonnenten für gültig bestimmt wird.

## Claims

1. Method for initiating at least one service from an application server (230), said at least one service setting in motion a plurality of devices (205, 210), each device from said plurality of devices belonging to one user from a plurality of users, at least one user from said plurality of users, termed subscriber, having subscribed to said at least one service and at least one user from said plurality of users, termed non-subscriber, not having subscribed to said at least one service, this method being **characterized in that** it comprises the following steps:
- generation (305), by a co-optation system, of an authentication certificate for said subscriber on the basis of an identifier of said subscriber;
- transmission (315) of said generated authentication certificate for said subscriber to a device of said non-subscriber;
- reception (320), by the co-optation system, of an authentication certificate originating from said device of said non-subscriber;
- determination (325) of the validity of said received authentication certificate, the validity of said received authentication certificate being determined in accordance with said identifier of said subscriber;
- if said received authentication certificate is valid, transmission (330), by the co-optation system, of said identifier of said subscriber, said identifier of said subscriber making it possible to initiate said at least one service.

2. Method according to Claim 1, wherein said step of transmission of said generated authentication certificate for said subscriber comprises a step of transmitting a link to said generated authentication certificate for said subscriber, said link making it possible to access the apparatus implementing said method in order to transmit thereto said authentication certificate for said subscriber.

3. Method according to Claim 2, furthermore comprising a step of creating (310) said link in accordance with a standard format.

4. Method according to any one of the preceding claims, wherein said step of determining the validity of said received authentication certificate comprises a step of comparing the date of reception of said received authentication certificate with a predetermined threshold.

5. Method according to any one of the preceding claims, furthermore comprising a step of reception (300), by the co-optation system, of a message from a device of said subscriber, said message comprising said identifier of said subscriber and an identifier of said non-subscriber, said generated authentication certificate for said subscriber being transmitted to said device of said non-subscriber in accordance with said identifier of said non-subscriber.

6. Method according to Claim 5, said identifier of said non-subscriber being an electronic address, the method furthermore comprising a step of creating a second message comprising at least said generated authentication certificate for said subscriber, said message being termed first message, said second message being transmitted to said electronic address.

7. Method according to any one of the preceding claims, furthermore comprising a step of protocol conversion during the transmission of said generated authentication certificate for said subscriber and the reception of said received authentication certificate.

8. Method for requesting the initiation of at least one service from an application server (230) with at least one device of a non-subscribed user, said at least one service setting in motion a plurality of devices (205, 210), each device from said plurality of devices belonging to one user from a plurality of users, at least one user from said plurality of users, termed subscriber, having subscribed to said at least one service, said non-subscribed user, termed non-subscriber, not having subscribed to said at least one service, this method being **characterized in that** it comprises the following steps:
- transmission of an identifier of said subscriber to a co-optation system in order to generate (305) an authentication certificate for said subscriber on the basis of said transmitted identifier and transmit (315) said generated authentication certificate for said subscriber to a device of said non-subscriber; and
- initiation of said at least one service depending on said identifier of said subscriber if an authentication certificate originating from said at least one device of said non-subscriber is determined to be valid by said co-optation system with respect to said identifier of said subscriber.

9. Method for the acceptance, by a device of a non-subscribed user, of the initiation of at least one service from an application server (230), said at least one service setting in motion a plurality of devices (205, 210), each device from said plurality of devices belonging to one user from a plurality of users, at least one user from said plurality of users, termed subscriber, having subscribed to said at least one service, said non-subscribed user not having subscribed to said at least one service, this method being **characterized in that** it comprises the following steps:
- reception, by said device of a non-subscribed user, of an authentication certificate for said subscriber generated on the basis of an identifier of said subscriber, said authentication certificate being received from a co-optation system;
- retransmission of said authentication certificate for said subscriber to said co-optation system via said application server; and
- initiation of said at least one service depending on said identifier of said subscriber if said authentication certificate for said subscriber is determined to be valid by said co-optation system with respect to said identifier of said subscriber.

10. Computer program comprising instructions designed for the implementation of each of the steps of the method according to any one of the preceding claims when said program is executed on a computer.

11. Co-optation system enabling the initiation of at least one service from an application server (230), said at least one service setting in motion a plurality of devices (205, 210), each device from said plurality of devices belonging to one user from a plurality of users, at least one user from said plurality of users, termed subscriber, having subscribed to said at least one service and at least one user from said plurality of users, termed non-subscriber, not having subscribed to said at least one service, this co-optation system being **characterized in that** it comprises the following means:
- means for generating an authentication certificate for said subscriber on the basis of an identifier of said subscriber;
- means for transmitting said generated authentication certificate for said subscriber to a device of said non-subscriber;
- means for receiving an authentication certificate originating from said device of said non-subscriber;
- means for determining the validity of said received authentication certificate, the validity of said received authentication certificate being determined in accordance with said identifier of said subscriber; and
- means for transmitting said identifier of said subscriber if said received authentication certificate is valid, said identifier of said subscriber making it possible to launch said at least one service.

12. Co-optation system according to Claim 11, furthermore comprising means for receiving a first message from a device of said subscriber, said first message comprising said identifier of said subscriber and an identifier of said non-subscriber, said identifier of said non-subscriber being an electronic address, and a step of creating a second message comprising at least said generated authentication certificate, said second message being transmitted to said electronic address.

13. Apparatus for requesting the initiation of at least one service from an application server (230) with at least one device of a non-subscribed user, said at least one service setting in motion a plurality of devices (205, 210), each device from said plurality of devices belonging to one user from a plurality of users, at least one user from said plurality of users, termed subscriber, having subscribed to said at least one service, said non-subscribed user, termed non-subscriber, not having subscribed to said at least one service, this apparatus being **characterized in that** it comprises the following means:
- means for transmitting an identifier of said subscriber to a co-optation system in order to generate (305) an authentication certificate for said subscriber on the basis of said transmitted identifier and transmit (315) said generated authentication certificate for said subscriber to a device of said non-subscriber; and
- means for initiating said at least one service depending on said identifier of said subscriber if an authentication certificate originating from said at least one device of said non-subscriber is determined to be valid by said co-optation system with respect to said identifier of said subscriber.

14. Apparatus for the acceptance, by a device of a non-subscribed user, of the initiation of at least one service from an application server (230), said at least one service setting in motion a plurality of devices (205, 210), each device from said plurality of devices belonging to one user from a plurality of users, at least one user from said plurality of users, termed subscriber, having subscribed to said at least one service, said non-subscribed user not having subscribed to said at least one service, this apparatus being **characterized in that** it comprises the following means:
- means for receiving an authentication certificate for said subscriber generated on the basis of an identifier of said subscriber, said authentication certificate for said subscriber being received from a co-optation system;
- means for retransmitting said authentication certificate for said subscriber to said cooptation system via said application server; and
- means for initiating said at least one service depending on said identifier of said subscriber if said authentication certificate for said subscriber is determined to be valid by said cooptation system with respect to said identifier of said subscriber.
